**Europäisches Patentamt**

**European Patent Office**

**Office européen des brevets**

(19)

(11) Numéro de publication: **0 032 642**
**B2**

(12) NOUVEAU FASCICULE DE BREVET EUROPEEN

(45) Date de publication du nouveau fascicule du brevet:
**08.01.86**

(21) Numéro de dépôt: **80401611.1**

(22) Date de dépôt: **12.11.80**

(51) Int. Cl.⁴: **B 23 B 3/06,** B 23 B 3/16

(54) **Tour à broche horizontale.**

(30) Priorité: **22.01.80 FR 8001293**

(43) Date de publication de la demande:
**29.07.81 Bulletin 81/30**

(45) Mention de la délivrance du brevet:
**11.05.83 Bulletin 83/19**

(45) Mention de la décision concernant l'opposition:
**08.01.86 Bulletin 86/2**

(84) Etats contractants désignés:
**BE CH DE GB IT LI**

(56) Documents cités:
**DE - A - 2 658 146**
**DE - C - 447 695**
**DE - C - 2 401 656**
**FR - A - 1 601 298**
**GB - A - 803 434**
**US - A - 4 130 033**

**2 Prospectus des Ateliers Stokuis "team"**

(73) Titulaire: **H. ERNAULT-SOMUA Société dite:, 32, avenue de l'Europe, F-78140 Vélizy-Villacoublay (FR)**

(72) Inventeur: **Berly, Marcel, 42 Chemin des Hauts Graviers, F-91370 Verriere le Buisson (FR)**

(74) Mandataire: **Loriot, Jacques et al, c/o SA. FEDIT-LORIOT 38, avenue Hoche, F-75008 Paris (FR)**

**Description**

L'invention concerne les tours à broche horizontale et, plus particulièrement, la structure des bâtis de ces machines.

Les tours à broche horizontale modernes comportent deux groupes de glissières horizontales sur lesquelles peuvent coulisser respectivement deux chariots porte-outils indépendamment l'un de l'autre; les outils peuvent être fixés directement sur les chariots ou bien sur des tourelles montées à pivotement sur lesdits chariots.

On connaît deux types de bâtis, à savoir: ceux dans lesquels un seul banc porte les deux groupes de glissières (p. ex. DE-A-2 658 146) et ceux dans lesquels les deux groupes de glissières sont portés respectivement par deux bancs rendus solidaires l'un de l'autre par assemblage (p. ex. FR-A-1 601 298) ou faisant éventuellement partie d'un bâti monobloc. Tous ces types de bâtis connus présentent leurs inconvénients.

En effet, lorsqu'un seul banc porte les deux groupes de glissières, celles-ci sont habituellement toutes situées dans un même plan, le plus souvent fortement incliné par rapport à l'horizontale, de sorte que, dans certains cas, il se produit des interférences entre les trajets des deux chariots et que le travail simultané de ceux-ci n'est possible que dans certains cas bien particuliers; il est donc impossible de déterminer le programme d'usinage d'une pièce sans procéder à des tracés permettant de vérifier que le cycle d'opérations d'usinage envisagé est réalisable matériellement sur la machine considérée.

Les bâtis à deux bancs présentent des inconvénients propres à leur principe général même et des inconvénients inhérents à chaque forme d'exécution particulière. D'une manière générale, on peut dire qu'ils se prêtent mal à l'évacuation des copeaux et que la protection de certaines glissières et de certains organes de commande et de mesure pose des problèmes.

Dans une première disposition connue de bâti à deux bancs, ces derniers sont superposés en arrière de l'axe géométrique de la broche de la machine, de sorte que, en plus des inconvénients généraux déjà indiqués plus haut, cette solution est relativement onéreuse, car elle nécessite un travail de réalisation d'un parallélisme rigoureux des deux groupes de glissières lors de leur montage sur les deux bancs, c'est-à-dire sur deux organes distincts. Cet inconvénient disparaît si les deux bancs font partie d'un bâti monobloc, mais la fabrication d'un tel bâti n'est pas sans difficultés.

Dans une deuxième disposition connue de bâtis à deux bancs ces derniers sont placés l'un derrière l'autre, de part et d'autre du plan géométrique vertical passant par l'axe de la broche, en-dessous du niveau dudit axe. Il en résulte que la broche de la machine se trouve située entre les deux chariots, ce qui est une source de difficultés de chargement et de déchargement des pièces. De plus, les outils portés par le chariot arrière sont difficilement accessibles et les deux chariots présentent des parties planes horizontales qui retiennent malencontreusement les copeaux.

Dans une troisième disposition connue de bâtis à deux bancs, l'un de ces derniers est situé sensiblement en-dessous de l'axe de la broche et l'autre, sensiblement au niveau dudit axe, en arrière de celui-ci; autrement dit, l'ensemble des deux bancs présente une surface géométrique plane inclinée vers le bas et vers l'avant. Dans cette solution, la construction du chariot inférieur oblige à placer l'axe de la broche dans une position relativement haute et, comme cette broche se trouve entre les trajets des deux chariots, elle est difficilement accessible. Enfin, il est malaisé d'atteindre les outils montés sur le chariot supérieur.

Le but de l'invention est de réaliser un bâti de tour à broche horizontale qui ne présente pas les inconvénients rappelés plus haut des modes de réalisation connus en question.

A cet effet, le tour à broche horizontale suivant l'invention, qui est du type à plusieurs chariots porte-outils coulissant sur deux paires de glissières portées par un seul banc qui est solidaire du bâti de la machine et qui est disposé parallèlement à l'axe géométrique de la broche rotative porte-pièce, en arrière du plan géométrique vertical passant par ledit axe, les deux parties de glissières précitées étant situées, respectivement, sur deux faces longitudinales adjacentes dudit banc dont l'une est située au-dessus du niveau de l'axe géométrique de la broche rotative porte-pièce, les deux paires de glissières comportant, chacune, une glissière de guidage et une glissière de retenue, les deux glissières de guidage étant situées au voisinage immédiat de l'arête commune aux deux faces adjacentes précitées du banc comme connu des prospectus de la société des Ateliers Stokvis «tuam», est caractérisé en ce que l'une des faces longitudinales précitées est une face avant verticale et l'autre une face horizontale inférieure située aussi au-dessus du niveau de l'axe géométrique de la broche rotative porte-pièce.

Grâce à cette structure particulière, le tour ne présente aucun des inconvénients précités des tours à structures connus rappelées plus haut. Tout d'abord, il ne présente évidemment pas les inconvénients divers des tours à deux bancs, puisqu'il n'en possède qu'un seul. Ensuite, si on le compare au tour connu à banc unique rappelé plus haut, on constate qu'il ne présente pas l'inconvénient d'une interférence possible entre les trajets des deux chariots, puisque les deux faces du banc sur lesquelles coulissent ces deux chariots sont situées dans des plans différents au lieu d'être situées dans un même plan, de sorte qu'il est possible de faire travailler les deux chariots simultanément dans tous les cas d'opérations d'usinage. Il en résulte qu'il n'y a aucune contrainte dans la détermination des programmes d'usinage du point de vue de la gêne que pourrait provoquer une interférence inopinée des deux chariots.

Par ailleurs la structure particulière du tour suivant l'invention présente tous les avantages que peuvent posséder les différents types de tours connus, à savoir: la broche rotative porte-pièce peut être située à une hauteur normalisée et positionnée à une distance favorable à un chargement manuel des pièces sans effort particulier; les outils portés par les chariots sont facilement accessibles et leur surveillance est facilitée par la proximité de l'opérateur; l'évacuation des copeaux est très bonne puisque les chariots se trouvent, tous les deux, au-dessus de la pièce en cours d'usinage et que le bâti du tour peut ne comporter aucune surface horizontale en-dessous de la pièce; les organes de commande et de mesure des déplacements des chariots peuvent facilement être situés à des emplacements où ils se trouvent parfaitement protégés contre les projections du liquide d'arrosage utilisé pour faciliter la coupe et refroidir les arêtes tranchantes des outils.

L'invention sera mieux comprise à la lecture de la description qui va suivre et à l'examen des dessins annexés qui montrent, à titre d'exemple, un mode de réalisation de l'invention. Sur ces dessins:

la figure 1 est une vue de face, avec des arrachements, d'un tour à broche horizontale suivant l'invention, le capot avant de protection étant supposé enlevé; et

la figure 2 est une coupe verticale de profil, également avec des arrachements, faite suivant la ligne II–II de la figure 1.

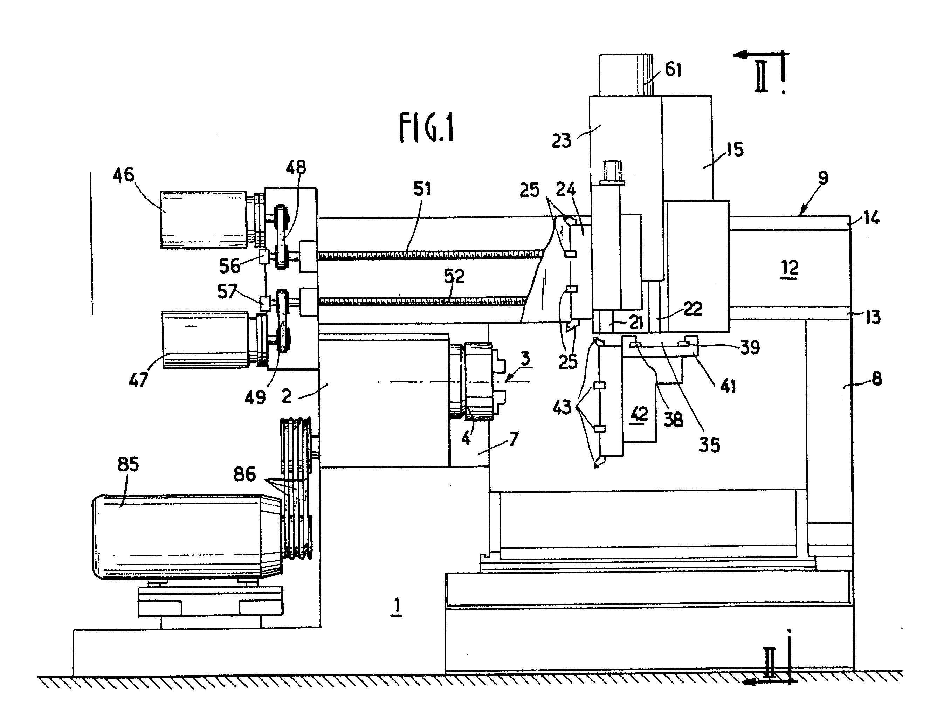

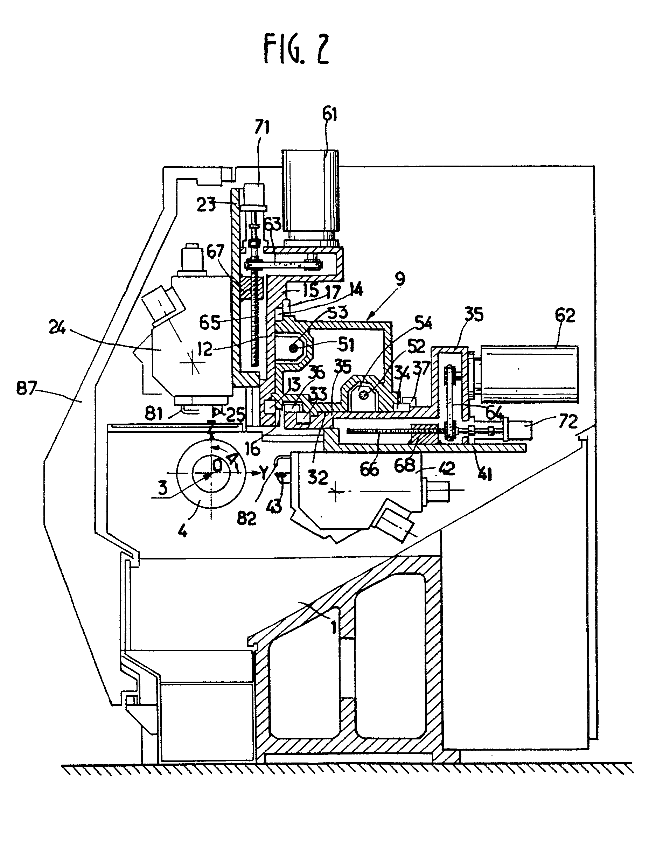

Le tour à broche horizontale représenté sur les figures 1 et 2 comporte un bâti 1 qui supporte une poupée fixe 2 dans laquelle tourillonne une broche rotative porte-pièce horizontale représentée seulement par son axe géométrique 3. Dans l'exemple, la broche 3 est munie d'un mandrin 4 de serrage des pièces à usiner. Le bâti 1 supporte aussi, par l'intermédiaire de deux piliers 7, 8, un banc 9 parallèle à la broche 3 et situé dans l'angle dièdre «A» formé par les deux demi-plans géométriques OZ, OY s'étendant, à partir de l'axe géométrique de la broche rotative porte-pièce 3, respectivement, au-dessus et en arrière dudit axe.

Le banc 9 présente une face longitudinale avant 12, verticale dans l'exemple, qui est munie d'une glissière inférieure de guidage 13 et d'une glissière supérieure de retenue 14 sur lesquelles peut coulisser un chariot longitudinal horizontal supérieur 15 maintenu sur lesdites glissières, respectivement, par deux brides 16, 17 et muni, lui-même de deux glissières verticales 21, 22 sur lesquelles peut coulisser une coulisse transversale verticale 23 qui porte une tourelle 24, supportant plusieurs outils de coupe 25.

Le banc 9 présente, en outre, une face longitudinale inférieure 32, horizontale dans l'exemple, qui est munie d'une glissière avant de guidage 33 et d'une glissière arrière de retenue 34 sur lesquelles peut coulisser un chariot longitudinal horizontal inférieur 35 maintenu sur lesdites glissières, respectivement, par deux brides 36, 37 et muni, lui-même, de deux glissières transversales 38, 39 sur lesquelles peut coulisser une coulisse transversale 41 qui porte une tourelle 42 supportant plusieurs outils de coupe 43.

Les déplacements des différents chariots sur leurs glissières sont assurés par tous moyens classiques appropriés. Ainsi, par exemple, les déplacements des deux chariots longitudinaux 15 et 35 sont assurés, respectivement, à partir de deux moteurs 46, 47, par l'intermédiaire de transmissions à courroies crantées 48, 49 et de deux vis-mères 51, 52 en prise avec deux écrous 53, 54 respectivement solidaires de ces deux chariots. On a indiqué, en 56 et 57, des appareils de mesure associés aux deux vis-mères et utilisables, notamment, lorsque la machine est à commande numérique. D'une manière analogue, les deux coulisses transversales 23 et 41 sont actionnées, respectivement, à partir de deux moteurs 61, 62, par l'intermédiaire de transmissions à courroies crantées 63, 64 et de deux vis-mères 65, 66 en prise avec deux écrous 67, 68 respectivement solidaires de ces deux chariots. Des appareils de mesure 71, 72 sont associés aux deux vis-mères. Sur la figure 2, on a encore indiqué des tuyaux 81, 82 d'amenée du liquide d'arrosage.

La broche 3 de la machine est entraînée en rotation également par tous moyens classiques appropriés comportant, par exemple, un moteur 85 (figure 1) et une transmission par courroies trapézoïdales 86. Sur la figure 2, on peut voir le protecteur avant transparent 87 qui est supposé enlevé sur la figure 1.

On remarquera que, grâce à sa structure particulière, un tel tour présente pratiquement tous les avantages des tours connus, sans avoir aucun de leurs inconvénients. En effet:

– la broche rotative porte-pièce 3 peut être située à une hauteur normalisée et positionnée à une distance de la face avant de la machine telle que le chargement et le déchargement manuels des pièces puisse se faire sans efforts et sans danger, notamment par le fait que l'ouvrier n'a pas à monter sur la machine ou sur un tabouret pour effectuer ces opérations;
– les outils 25, 43 sont facilement accessibles et leur surveillance est facilitée par leur proximité de l'opérateur;
– les chariots ne reçoivent pas de copeaux et, par conséquent, les organes de commande et de mesure des déplacements desdits chariots n'en reçoivent pas non plus;
– l'évacuation des copeaux peut se faire dans les meilleures conditions grâce à l'absence de parties horizontales en-dessous de la zone de travail des outils;
– il ne se produit pas d'interférence entre les trajets des deux chariots longitudinaux 15, 35 de sorte qu'on peut faire travailler ceux-ci simultanément et qu'on peut procéder à la préparation du programme d'usinage d'une pièce sans être obligé de recourir à des tracés pour s'assurer de la possibilité de mise en œuvre du programme;

– les glissières 13 et 33 de guidage des deux chariots longitudinaux 15 et 35 se trouvent au plus près de l'axe de la broche rotative porte-pièce, ce qui est une condition très favorable à une grande précision d'usinage;

– enfin, puisque toutes les glissières des chariots sont portées par un banc unique, le constructeur rencontre moins de difficultés dans l'obtention d'un parallélisme rigoureux desdites glissières, que lorsqu'il s'agit de tours à deux bancs.

## Revendications

1. Tour à broche horizontale à plusieurs chariots porte-outils (15, 35) coulissant sur deux paires de glissières (13, 14 et 33, 34) portées par un seul banc (9) qui est solidaire du bâti (1) de la machine et qui est disposé parallèlement à l'axe géométrique (O) de la broche rotative porte-pièce (3), en arrière du plan géométrique vertical (OZ) passant par ledit axe, les deux parties de glissières précitées (13, 14 et 33, 34) étant situées, respectivement, sur deux faces longitudinales adjacentes (12, 32) dudit banc (9) dont l'une (12) est située au-dessus du niveau de l'axe géométrique (O) de la broche rotative porte-pièce (3), les deux paires de glissières comportant, chacune, une glissière de guidage (13 ou 33) et une glissière de retenue (14 ou 34), les deux glissières de guidage (13, 33) étant situées au voisinage immédiat de l'arête commune aux deux faces adjacentes précitées (12, 32) du banc (9), caractérisé en ce que l'une des faces longitudinales précitées (12) est une face avant verticale et l'autre (32) une face horizontale inférieure située aussi au-dessus du niveau de l'axe géométrique (O) de la broche rotative porte-pièce (3).

2. Tour suivant la revendication 1, caractérisé en ce que les organes de commande (61, 62) et éventuellement de mesure (71, 72) des mouvements de coulisses transversales (23, 41) portées par les chariots longitudinaux (15, 35) coulissant sur les glissières précitées (13, 14 et 33, 34) sont situés, respectivement, à la partie supérieure de la coulisse transversale (23) portée par le chariot longitudinal supérieur (15) qui coulisse sur les glissières de la face longitudinale verticale (12) du banc (9), et à la partie arrière de la coulisse transversale (41) portée par le chariot longitudinal inférieur (35) qui coulisse sur les glissières de la face longitudinale horizontale (32) du banc (9).

## Patentansprüche

1. Horizontalspindeldrehbank mit mehreren Werkzeugschlitten (15, 35), die auf zwei Paaren von Gleitführungen (13, 14 und 33, 34) gleiten, welche von einem einzigen Bett (9) getragen werden, das mit dem Gestell (1) der Maschine fest verbunden ist und das parallel zur geometrischen Achse (O) der drehbaren Werkstückspindel (3) angeordnet ist, wobei auf der Rückseite der durch die betreffende Achse laufenden vertikalen geometrischen Ebene (OZ) die beiden genannten Gleitführungen (13, 14 und 33, 34) auf zwei benachbarten Längsflächen (12, 32) des genannten Bettes (9) angeordnet sind, wobei die eine Längsfläche (12) oberhalb der Höhe der geometrischen Achse (O) der Werkstückdrehspindel (3) angeordnet ist, wobei die beiden Paare der Gleitführungen jeweils eine Führungsbahn (13 oder 33) und eine Halterungsbahn (14 oder 34) umfasst, wobei die beiden Führungsbahnen (13, 33) sich in unmittelbarer Nähe der Kante befinden, die den beiden zuvor genannten benachbarten Flächen (12, 32) des Bettes (9) gemeinsam ist, dadurch gekennzeichnet, dass die eine Fläche (12) der zuvor genannten Längsflächen eine vertikale Vorderfläche und die andere Fläche (32) der zuvor genannten Längsflächen eine horizontale untere Fläche ist, die überdies oberhalb der Höhe der geometrischen Achse (O) der drehbaren Werkstücksspindel (3) angeordnet ist.

2. Drehbank nach Anspruch 1, dadurch gekennzeichnet, dass die Antriebsorgane (61, 62) und ggfs. die Messorgane (71, 72) zur Messung der Bewegungen der Querführungen (23, 41), die von den Längsschlitten (15, 35) getragen werden, welche auf den zuvor genannten Gleitführungen (13, 14 und 33, 34) gleiten, am oberen Teil der Querführung (23), die vom oberen Längsschlitten (15) getragen wird, der auf den Gleitführungen der vertikalen Längsfläche (12) des Bettes (9) gleitet, bzw. am hinteren Teil der Querführung (41) angeordnet sind, die von dem unteren Längsschlitten (35) getragen ist, der auf den Gleitführungen der horizontalen Längsfläche (32) des Bettes (9) gleitet.

## Claims

1. Horizontal spindle lathe with a plurality of tool-holding carriages (15, 35) sliding on two pairs of slideways (13, 14 and 33, 34) carried by a single bed (9) integral with the bed-plate (1) of the machine and parallel to the geometric axis (O) of the rotary work-holding spindle (3), at the rear of the vertical geometric plane (OZ) passing through the said axis, the two above mentioned pairs of slideways (13, 14 and 33, 34) being located respectively on two adjacent longitudinal faces (12, 32) of the said bed (9), one of which (12) is located above the level of the geometrical axis (O) of the rotary work holding spindle (3), both pairs of slideways comprising, each, a guiding slideway (13 or 33) and a retaining slideway (14 or 34), the two guiding slideways (13, 33) being located in the immediate vicinity of the edge common to the two said adjacent faces (12, 32) of the bed (9), characterized in that one of the above longitudinal faces (12) is a front vertical face and the other (32) is a bottom horizontal face located also above the level of the geometrical axis (O) of the rotary work-holding spindle (3).

2. Lathe according to claim 1, characterized in that the means (61, 62) controlling and contingently gauging (71, 72) the movements of cross-slides (23, 41) carried by the longitudinal carriages (15, 35) sliding on the aforesaid slideways (13, 14 and 33, 34) are located, respectively, at the upper part of the cross-slide (23) carried by the upper longitudinal carriage (15) which slides on the slideways of the longitudinal front face of the bed (9), and at the rear part of the cross-slide (41) carried by the lower longitudinal carriage (35) which slides on the slideways of the longitudinal horizontal face (32) of the bed (9).

FIG.1

# FIG. 2